# EUROPEAN PATENT SPECIFICATION

(11) **EP 3 117 891 B1**
(45) Date of publication and mention of the grant of the patent: **16.09.2020**
(21) Application number: 16179499.5
(22) Date of filing: 14.07.2016
(51) Int. Cl.: B01D 53/22, B64D 37/32

(54) **AIR SEPARATION UNIT WITH PROTECTION SYSTEM FOR POLYMERIC AIR SEPARATION MEMBRANE**
LUFTZERLEGUNGSEINHEIT MIT SCHUTZSYSTEM FÜR POLYMERISCHE LUFTTRENNUNGSMEMBRAN
INSTALLATION DE SÉPARATION D'AIR AVEC SYSTÈME DE PROTECTION POUR MEMBRANE POLYMÉRIQUE DE SÉPARATION D'AIR

(30) Priority: 14.07.2015 US 201514799145
(43) Date of publication of application: 18.01.2017
(73) Proprietor: Hamilton Sundstrand Corporation, Charlotte, NC 28217 (US)
(72) Inventor: THIBAUD, Catherine, South Windsor, CT Connecticut 06074 (US)
(74) Representative: Dehns

(56) References cited:
- WO-A1-2008/030097
- WO-A2-2007/005979
- US-A1- 2005 173 017
- US-A1- 2015 000 523
- US-A1- 2015 158 012

## Description

### BACKGROUND

This disclosure relates to air separation systems for aircraft, and more specifically to a polymeric air separation membrane in a nitrogen generation system.

Aircraft fuel tanks and containers can contain potentially combustible combinations of oxygen, fuel vapors, and ignition sources. In order to prevent combustion, the ullage of fuel tanks and containers is filled with air with high nitrogen concentration, or nitrogen-enriched air (NEA). A nitrogen generation system (NGS) is commonly used to produce NEA for inerting fuel tanks and containers. An air separation module (ASM) in the NGS separates ambient air into NEA, which is directed to fuel tanks and containers, and oxygen-enriched air (OEA), which is rejected overboard. The ASM typically includes a polymeric membrane for separating ambient air into NEA and OEA.

Polymeric membranes are sensitive to degradation either from adsorption of gaseous chemical species on or within the polymeric matrix of the membrane or from chemical reactions within the polymeric matrix. Gaseous contaminants that cause membrane degradation can be found in aerosol or gas phases in the feed stream for an NGS. These contaminants can include hydrocarbons from hydraulic fluid and deicing fluids, such as formaldehyde. Other contaminants include inorganic contaminants found in ambient air such as sulfur dioxide, nitrogen dioxide, and hydrogen sulfide. These gaseous contaminants can significantly reduce the life of the polymeric membrane in an ASM.

WO 2008/030097 A1 discloses an ASM including a membrane for inerting air craft fuel tanks. A catalyst is provided for protecting the ASM's membrane from degradation by gaseous contaminants.

### SUMMARY

In one embodiment, an air separation system according to claim 1 is provided.

In another embodiment, a method of protecting a polymeric membrane of an air separation module in an air separation system according to claim 8 is provided.

### BRIEF DESCRIPTION OF THE DRAWINGS

FIG. 1 is a schematic diagram of a nitrogen generation system.
FIG. 2 is a schematic diagram of another embodiment of the nitrogen generation system of FIG. 1.
FIG. 3 is a schematic diagram of another embodiment of the nitrogen generation system of FIG. 1.

### DETAILED DESCRIPTION

The present disclosure relates to an air separation system, specifically a nitrogen generation system (NGS), for generating air with high nitrogen concentration (nitrogen-enriched air). An air separation module (ASM) in the NGS separates feed air into nitrogen-enriched air (NEA) and oxygen-enriched air (OEA). The ASM includes a polymeric membrane, which separates the feed air into NEA and OEA. A gaseous contaminant removal system removes gaseous inorganic and organic contaminants from the feed air before the feed air comes into contact with the polymeric membrane in order to prevent the polymeric membrane from degrading due to exposure to the contaminants. This prolongs the life of the polymeric membrane, resulting in less frequent replacement of the membrane and lower maintenance costs for the NGS.

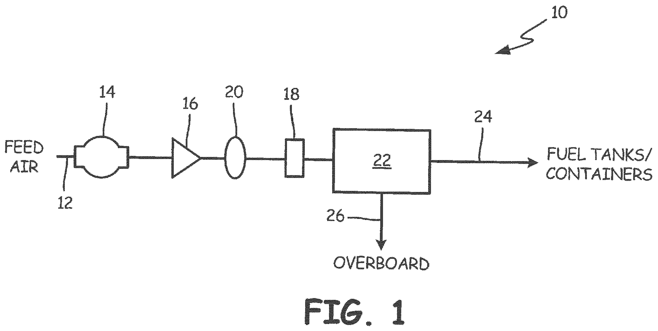

FIG. 1 is a schematic diagram of NGS 10. NGS 10 includes feed air line 12, mechanical separator 14, ozone converter 16, high-efficiency particulate arrestance (HEPA) filter 18, gaseous contaminant removal system 20, ASM 22, NEA line 24, and OEA line 26. Feed air enters NGS 10 through feed air line 12. The feed air flows through mechanical separator 14, ozone converter 16, gaseous contaminant removal system 20, and HEPA filter 18 prior to flowing into ASM 22.

ASM 22 receives feed air through feed air line 12 and separates the feed air into NEA and OEA. The NEA leaves ASM 22 through NEA line 24 and is routed to fuel tanks and containers for inerting. The OEA leaves ASM 22 through OEA line 26 and is typically rejected overboard. ASM 22 can be a membrane-based ASM with a membrane made of a polymer such as poly(1-trimethylsilyl-1-propyne), Teflon, silicone rubber, poly(4-methyl-1-pentene), poly(phenylene oxide), ethyl cellulose, polyimide, polysulfone, polyaramide, tetrabromo bis polycarbonate, or combinations thereof.

Mechanical separator 14 removes oil particles from the feed air in feed air line 12, reducing the risk of system failure due to ingestion of an oil slug. Ozone converter 16 removes ozone contaminants from the feed air using an ozone catalyst. HEPA filter 18 removes particle contaminants from the feed air. In the embodiment shown, mechanical separator 14 is located upstream of ozone converter 16, and ozone converter 16 is located upstream of HEPA filter 18.

Gaseous contaminant removal system 20 removes gaseous contaminants from the feed air in feed air line 12. These contaminants can include hydrocarbons from hydraulic fluid and deicing fluids, and engine generated contaminants such as benzene, xylenes, toluene, and formaldehyde. Other potential contaminants include inorganic contaminants found in the ground atmosphere, such as sulfur dioxide, nitrogen dioxide, and hydrogen sulfide. Gaseous contaminant removal system 20 is an adsorption and reaction system that decreases the concentration of gaseous contaminants in the feed air entering ASM 22. Gaseous contaminant removal system 20 includes a sorbent for adsorbing contaminants and a catalyst for reacting with contaminants in order to remove the contaminants from the feed air. Gaseous contaminant removal system 20 uses Ui-66 as MOF porous sorbent to adsorb inorganic compounds such as sulfur dioxide, nitrogen dioxide, and hydrogen sulfide. Other MOF sorbents or activated carbon based sorbents are used to adsorb hydrocarbons. Gold based catalysts react with contaminants such as formaldehyde to remove them from the feed air.

In the embodiment shown, gaseous contaminant removal system 20 is placed in a flow through configuration in feed air line 12, so that the feed air flows through gaseous contaminant removal system 20. As the feed air flows through gaseous contaminant removal system 20, gaseous contaminant removal system 20 adsorbs and reacts with gaseous contaminants in the feed air, preventing the contaminants from entering ASM 22. In one embodiment, gaseous contaminant removal system 20 can include a packed bed with sorbent and catalyst pellets. In another embodiment, gaseous contaminant removal system 20 can include a filter with sorbent and catalyst fibers. It is advantageous to locate the catalyst fibers or pellets of gaseous contaminant removal system 20 in the hottest portion of gaseous contaminant removal system 20, as high temperatures are beneficial for catalytic processes. In the embodiment shown, gaseous contaminant removal system 20 is located upstream of HEPA filter 18 and downstream of ozone converter 16. In an alternative embodiment, gaseous contaminant removal system 20 can be integral to ozone converter 16 or HEPA filter 18.

Gaseous contaminant removal system 20 is advantageous, because gaseous contaminant system 20 prevents gaseous contaminants from entering ASM 22 and coming into contact with the membrane of ASM 22. This prevents degradation of the membrane of ASM 22 and improves the stability, accuracy, performance, and life of ASM 22. This results in less frequent replacement of the membrane of ASM 22 and therefore less frequent maintenance and lower maintenance costs for NGS 10.

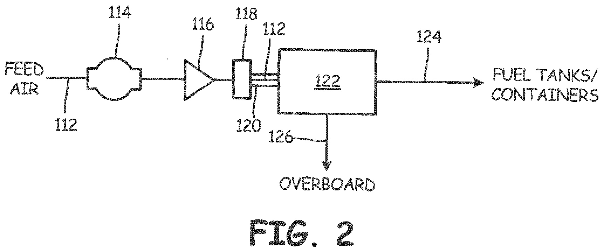

FIG. 2 is a schematic diagram of NGS 100, another embodiment of NGS 10 of FIG. 1. NGS 10 includes feed air line 112, mechanical separator 114, ozone converter 116, high-efficiency particulate arrestance (HEPA) filter 118, gaseous contaminant removal system 120, ASM 122, NEA line 124, and OEA line 126. NGS 100 functions similarly to NGS 10 in FIG. 1. Feed air enters NGS 100 through feed air line 112. The feed air flows through mechanical separator 114, ozone converter 116, HEPA filter 118, and gaseous contaminant removal system 120 prior to flowing into ASM 122.

ASM 122 receives feed air through feed air line 112 and separates the feed air into NEA and OEA. The NEA leaves ASM 122 through NEA line 124 and is routed to fuel tanks and containers for inerting. The OEA leaves ASM 122 through OEA line 126 and is typically rejected overboard. Mechanical separator 114 removes oil particles from the feed air in feed air line 112. Ozone converter 116 removes ozone contaminants from the feed air using an ozone catalyst. HEPA filter 118 removes particle contaminants from the feed air. In the embodiment shown, mechanical separator 114 is located upstream of ozone converter 116, and ozone converter 116 is located upstream of HEPA filter 118. In an alternative embodiment, HEPA filter 118 can be located upstream of ozone converter 116 and downstream of mechanical separator 114.

Gaseous contaminant removal system 120 removes gaseous contaminants from the feed air in feed air line 112. Gaseous contaminant removal system 120 functions similarly to gaseous contaminant removal system 20 of NGS 10, except gaseous contaminant removal system 120 is placed in a flow by configuration in feed air line 112. In the embodiment shown, gaseous contaminant removal system 120 is a coating that covers a portion of feed air line 112. The coating can include a sorbent for adsorbing contaminants and a catalyst for reacting with contaminants in order to remove the contaminants from the feed air entering ASM 122. When feed air flows through the portion of feed air line 112, the feed air flows by the coating of gaseous contaminant removal system 120. Gaseous contaminant removal system 120 adsorbs and reacts with gaseous contaminants in the feed air, preventing the contaminants from entering ASM 122.

Like gaseous contaminant removal system 20, gaseous contaminant removal system 120 is advantageous, because gaseous contaminant system 120 prevents gaseous contaminants from entering ASM 122 and coming into contact with the membrane of ASM 122. This prevents degradation of the membrane of ASM 122 and improves the stability, accuracy, performance, and life of ASM 122. This results in less frequent replacement of the membrane of ASM 122 and therefore less frequent maintenance and lower maintenance costs for NGS 100.

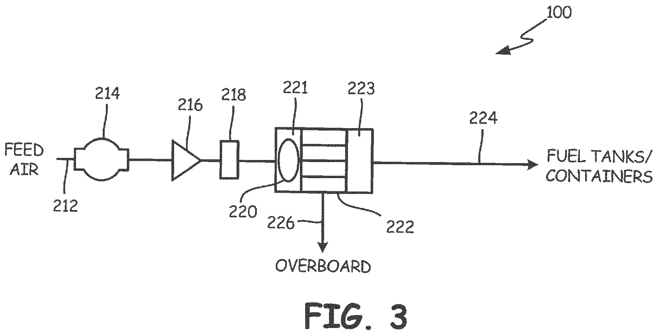

FIG. 3 is a schematic diagram of NGS 200, another embodiment of NGS 10 of FIG. 1. NGS 200 includes feed air line 212, mechanical separator 214, ozone converter 216, high-efficiency particulate arrestance (HEPA) filter 218, gaseous contaminant removal system 220, ASM 222 with inlet header 221 and outlet header 223, NEA line 224, and OEA line 226. NGS 200 functions similarly to NGS 10 in FIG. 1. Feed air enters NGS 200 through feed air line 212. The feed air flows through mechanical separator 214, ozone converter 216, and HEPA filter 218 prior to flowing into ASM 222.

ASM 222 receives feed air through feed air line 212 and separates the feed air into NEA and OEA. The NEA leaves ASM 122 through NEA line 224 and is routed to fuel tanks and containers for inerting. The OEA leaves ASM 222 through OEA line 226 and is typically rejected overboard. When feed air enters ASM 222, the feed air passes through inlet header 221 and enters the membrane of ASM 222. Gaseous contaminant removal system 220 is located in inlet header 221. Inlet header 221 is an empty space within ASM 222 where the flow of feed air is distributed prior to entering the membrane of ASM 222. The membrane separates the feed air into NEA and OEA, and the NEA flows through outlet header 223 into NEA line 224. Outlet header 223 is an empty space within ASM 222 where the NEA that is separated in the membrane of ASM 222 is combined prior to distribution to fuel tanks and containers through NEA line 224.

Mechanical separator 214 removes oil particles from the feed air in feed air line 112. Ozone converter 216 removes ozone contaminants from the feed air using an ozone catalyst. HEPA filter 218 removes particle contaminants from the feed air. In the embodiment shown, mechanical separator 214 is located upstream of ozone converter 216, and ozone converter 216 is located upstream of HEPA filter 218. In an alternative embodiment, HEPA filter 218 can be located upstream of ozone converter 216 and downstream of mechanical separator 214.

Gaseous contaminant removal system 220 removes gaseous contaminants from the feed air entering ASM 222. Gaseous contaminant removal system 220 functions similarly to gaseous contaminant removal system 20 of NGS 10, except gaseous contaminant removal system 220 is placed in a flow through configuration in inlet header 221 of ASM 222 instead of in feed air line 212. As the feed air flows through gaseous contaminant removal system 220, gaseous contaminant removal system 220 adsorbs and reacts with gaseous contaminants in the feed air, preventing the contaminants from entering the membrane of ASM 222. In one embodiment, gaseous contaminant removal system 220 can include a packed bed with sorbent and catalyst pellets. In another embodiment, gaseous contaminant removal system 220 can include a filter with sorbent and catalyst fibers.

Like gaseous contaminant removal systems 20 and 120, gaseous contaminant removal system 220 is advantageous, because gaseous contaminant system 220 prevents gaseous contaminants from entering ASM 222 and coming into contact with the membrane of ASM 222. This prevents degradation of the membrane of ASM 222 and improves the stability, accuracy, performance, and life of ASM 222. This results in less frequent replacement of the membrane of ASM 222 and therefore less frequent maintenance and lower maintenance costs for NGS 200. Gaseous contaminant removal system 220 is also advantageous, because placing gaseous contaminant removal system 220 in header 221 of ASM 222 saves space within NGS 200, allowing NGS 200 to be more compact and take up less space within an aircraft.

While the invention has been described with reference to an exemplary embodiment(s), it will be understood by those skilled in the art that various changes may be made and equivalents may be substituted for elements thereof without departing from the scope of the invention as defined by the claims.

## Claims

1. An air separation system comprising:
a feed air line (12) for transporting feed air;
an air separation module (22, 222) with a polymeric membrane, the air separation module (22, 222) configured to receive feed air through the feed air line and separate the feed air into nitrogen-enriched air and oxygen-enriched air;
a gaseous contaminant removal system (20, 120) upstream of the air separation module and configured to protect the polymeric membrane from degradation by removing gaseous contaminants from the feed air received by the air separation module (22);
a nitrogen-enriched air line (24, 124) for transporting the nitrogen-enriched air from the air separation module (22, 222) to a fuel tank for inerting; and
wherein the gaseous contaminant removal system (20, 120) includes a sorbent and a catalyst, wherein the sorbent is a UiO-66 metal organic framework porous sorbent configured to adsorb inorganic compounds in combination with a metal organic framework porous sorbent or an activated carbon based sorbent configured to adsorb hydrocarbons; and wherein the catalyst is gold based.

2. The air separation system of claim 1, wherein the gaseous contaminant removal system (20, 120) includes a packed bed with sorbent and catalyst pellets or a filter with sorbent and catalyst fibers.

3. The air separation system of claim 1, wherein the sorbent and the catalyst coat a portion of the feed air line.

4. The air separation system of claim 1, and further comprising a high-efficiency particulate arrestance filter upstream of the air separation module.

5. The air separation system of claim 4, and further comprising an ozone converter (116) upstream of the high-efficiency particulate arrestance filter.

6. The air separation system of claim 5, and further comprising a mechanical (114) separator upstream of the ozone converter.

7. The air separation system of claim 1, wherein:
the air separation module (22, 222) includes an inlet header (221), and an outlet header (223); and
the gaseous contaminant removal system is located in the inlet header (221) of the air separation module (22, 222).

8. A method of protecting a polymeric membrane of an air separation module in an air separation system, the method comprising:
flowing feed air through a feed air line;
removing gaseous contaminants in the feed air with a gaseous contaminant removal system (20, 120) to protect the polymeric membrane from degradation;
flowing the feed air through the polymeric membrane of the air separation module (22, 222);
separating the feed air into nitrogen-enriched air and oxygen-enriched air with the polymeric membrane;
transporting the nitrogen-enriched air from the air separation module to a fuel tank for inerting; and
wherein removing gaseous contaminants in the feed air comprises flowing the feed air through or by a sorbent and a catalyst, wherein the sorbent is a UiO-66 metal organic framework porous sorbent configured to adsorb inorganic compounds in combination with metal organic framework porous sorbent or an activated carbon based sorbent configured to adsorb hydrocarbons; and wherein the catalyst is gold based.

9. The method of claim 8, wherein the gaseous contaminants in the feed air are removed in a header of the air separation module (22, 222).

10. The method of claim 8, and further comprising:
removing oil particles from the feed air with a mechanical separator (214);
removing ozone contaminants from the feed air with an ozone converter (116); and
filtering the feed air with a high-efficiency particulate arrestance filter.

## Patentansprüche

1. Luftzerlegungssystem, Folgendes umfassend:
eine Zuluftleitung (12) zum Transportieren von Zuluft;
ein Luftzerlegungsmodul (22, 222) mit einer Polymermembran, wobei das Luftzerlegungsmodul (22, 222) dazu konfiguriert ist, Zuluft durch die Zuluftleitung zu empfangen und die Zuluft in mit Stickstoff angereicherte Luft und mit Sauerstoff angereicherte Luft zu zerlegen;
ein System (20, 120) zum Entfernen gasförmiger Verunreinigungen stromaufwärts des Luftzerlegungsmoduls, das dazu konfiguriert ist, die Polymermembran vor Beschädigung zu schützen, indem gasförmige Verunreinigungen aus der Zuluft entfernt werden, die von dem Luftzerlegungsmodul (22) empfangen wird;
eine Leitung (24, 124) für mit Stickstoff angereicherte Luft zum Transportieren der mit Stickstoff angereicherten Luft von dem Luftzerlegungsmodul (22, 222) zu einem Treibstofftank zur Inertisierung; und
wobei das System (20, 120) zum Entfernen gasförmiger Verunreinigungen ein Sorptionsmittel und einen Katalysator beinhaltet, wobei das Sorptionsmittel ein poröses Sorptionsmittel mit einem metallorganischen UiO-66-Gerüst, das dazu konfiguriert ist, anorganische Verbindungen zu adsorbieren, in Kombination mit einem porösen Sorptionsmittel mit metallorganischem Gerüst oder einem auf Aktivkohle basierenden Sorptionsmittel ist, das dazu konfiguriert ist, Kohlenwasserstoffe zu adsorbieren; und wobei der Katalysator auf Gold basiert.

2. Luftzerlegungssystem nach Anspruch 1, wobei das System (20, 120) zum Entfernen gasförmiger Verunreinigungen eine dichte Lage aus Sorptionsmittel- und Katalysatorpellets oder einen Filter mit Sorptionsmittel- und Katalysatorfasern beinhaltet.

3. Luftzerlegungssystem nach Anspruch 1, wobei ein Teil der Zuluftleitung mit dem Sorptionsmittel und dem Katalysator beschichtet ist.

4. Luftzerlegungssystem nach Anspruch 1, ferner einen hocheffizienten Partikelauffangfilter stromaufwärts des Luftzerlegungsmoduls umfassend.

5. Luftzerlegungssystem nach Anspruch 4, ferner einen Ozonkonverter (116) stromaufwärts des hocheffizienten Partikelauffangfilters umfassend.

6. Luftzerlegungssystem nach Anspruch 5, ferner einen mechanischen (114) Separator stromaufwärts des Ozonkonverters umfassend.

7. Luftzerlegungssystem nach Anspruch 1, wobei:
das Luftzerlegungsmodul (22, 222) einen Einlasskopf (221) und einen Auslasskopf (223) beinhaltet; und
das System zum Entfernen gasförmiger Verunreinigungen sich in dem Einlasskopf (221) des Luftzerlegungsmoduls (22, 222) befindet.

8. Verfahren zum Schützen einer Polymermembran eines Luftzerlegungsmoduls in einem Luftzerlegungssystem, wobei das Verfahren Folgendes umfasst:
Strömen von Zuluft durch eine Zuluftleitung;
Entfernen von gasförmigen Verunreinigungen in der Zuluft mittels eines Systems (20, 120) zum Entfernen gasförmiger Verunreinigungen, um die Polymermembran vor Beschädigung zu schützen;
Strömen der Zuluft durch die Polymermembran des Luftzerlegungsmoduls (22, 222);
Zerlegen der Zuluft in mit Stickstoff angereicherte Luft und mit Sauerstoff angereicherte Luft mittels der Polymermembran;
Transportieren der mit Stickstoff angereicherten Luft von dem Luftzerlegungsmodul zu einem Treibstofftank zur Inertisierung; und
wobei ein Entfernen von gasförmigen Verunreinigungen aus der Zuluft ein Strömen der Zuluft durch ein Sorptionsmittel und einen Katalysator oder an diesen vorbei umfasst, wobei das Sorptionsmittel ein poröses Sorptionsmittel mit einem metallorganischen UiO-66-Gerüst, das dazu konfiguriert ist, anorganische Verbindungen zu adsorbieren, in Kombination mit einem porösen Sorptionsmittel mit einem metallorganischen Gerüst oder einem auf Aktivkohle basierenden Sorptionsmittel ist, das dazu konfiguriert ist, Kohlenwasserstoffe zu adsorbieren; und wobei der Katalysator auf Gold basiert.

9. Verfahren nach Anspruch 8, wobei die gasförmigen Verunreinigungen in der Zuluft in einem Kopf des Luftzerlegungsmoduls (22, 222) entfernt werden.

10. Verfahren nach Anspruch 8, ferner Folgendes umfassend:
Entfernen von Ölpartikeln aus der Zuluft mittels eines mechanischen Separators (214);
Entfernen von Ozon-Verunreinigungen aus der Zuluft mittels eines Ozonkonverters (116); und
Filtern der Zuluft mit einem hocheffizienten Partikelauffangfilter.

## Revendications

1. Système de séparation d'air comprenant :
une conduite d'air d'alimentation (12) pour transporter l'air d'alimentation ;
un module de séparation d'air (22, 222) avec une membrane polymérique, le module de séparation d'air (22, 222) étant conçu pour recevoir l'air d'alimentation par le biais de la conduite d'air d'alimentation et séparer l'air d'alimentation en air enrichi en azote et en air enrichi en oxygène ;
un système d'élimination de contaminants gazeux (20, 120) en amont du module de séparation d'air et conçu pour protéger la membrane polymérique de la dégradation en éliminant les contaminants gazeux de l'air d'alimentation reçu par le module de séparation d'air (22) ;
une conduite d'air enrichi en azote (24, 124) pour transporter l'air enrichi en azote du module de séparation d'air (22, 222) vers un réservoir de carburant pour l'inertage ; et
dans lequel le système d'élimination de contaminants gazeux (20, 120) comprend un sorbant et un catalyseur, dans lequel le sorbant est un sorbant poreux à structure organique métallique UiO-66 conçu pour adsorber des composés inorganiques en combinaison avec un sorbant poreux à structure organique métallique ou un sorbant à base de charbon actif conçu pour adsorber les hydrocarbures ; et dans lequel le catalyseur est à base d'or.

2. Système de séparation d'air selon la revendication 1, dans lequel le système d'élimination de contaminants gazeux (20, 120) comprend un lit garni de sorbant et de pastilles de catalyseur ou un filtre garni de sorbant et de fibres de catalyseur.

3. Système de séparation d'air selon la revendication 1, dans lequel le sorbant et le catalyseur recouvrent une partie de la conduite d'air d'alimentation.

4. Système de séparation d'air selon la revendication 1, et comprenant en outre un filtre d'arrêt de particules à haute efficacité en amont du module de séparation d'air.

5. Système de séparation d'air selon la revendication 4, et comprenant en outre un convertisseur d'ozone (116) en amont du filtre d'arrêt de particules à haute efficacité

6. Système de séparation d'air selon la revendication 5, et comprenant en outre un séparateur mécanique (114) en amont du convertisseur d'ozone.

7. Système de séparation d'air selon la revendication 1, dans lequel :
le module de séparation d'air (22, 222) comporte un collecteur d'entrée (221) et un collecteur de sortie (223) ; et
le système d'élimination de contaminants gazeux est situé dans le collecteur d'entrée (221) du module de séparation d'air (22, 222).

8. Procédé de protection d'une membrane polymérique d'un module de séparation d'air dans un système de séparation d'air, le procédé comprenant :
l'écoulement d'air d'alimentation dans une conduite d'air d'alimentation ;
l'élimination de contaminants gazeux dans l'air d'alimentation avec un système d'élimination de contaminants gazeux (20, 120) pour protéger la membrane polymérique de la dégradation ;
l'écoulement de l'air d'alimentation à travers la membrane polymérique du module de séparation d'air (22, 222) ;
la séparation de l'air d'alimentation en air enrichi en azote et en air enrichi en oxygène à l'aide de la membrane polymérique ;
le transport de l'air enrichi en azote du module de séparation d'air à un réservoir de carburant pour l'inertage ; et
dans lequel l'élimination de contaminants gazeux dans l'air d'alimentation comprend l'écoulement de l'air d'alimentation à travers ou par un sorbant et un catalyseur, dans lequel le sorbant est un sorbant poreux à structure organique métallique UiO-66 conçu pour adsorber des composés inorganiques en combinaison avec un sorbant poreux à structure organique métallique ou un sorbant à base de charbon actif conçu pour adsorber des hydrocarbures ; et dans lequel le catalyseur est à base d'or.

9. Procédé selon la revendication 8, dans lequel les contaminants gazeux dans l'air d'alimentation sont éliminés dans un collecteur du module de séparation d'air (22, 222).

10. Procédé selon la revendication 8, et comprenant en outre :
l'élimination de particules d'huile de l'air d'alimentation à l'aide d'un séparateur mécanique (214) ;
l'élimination de contaminants ozone de l'air d'alimentation à l'aide d'un convertisseur d'ozone (116) ;
et
le filtrage de l'air d'alimentation avec un filtre antiparticules à haute efficacité.
